# FASCICULE DE BREVET EUROPEEN

(11) **EP 2 862 415 B1**
(45) Date de publication et mention de la délivrance du brevet: **06.11.2019**
(21) Numéro de dépôt: 13730563.7
(22) Date de dépôt: 19.06.2013
(51) Int. Cl.: H05B 6/42, B29C 45/72

(54) **MOULE À CHAUFFAGE ET REFROIDISSEMENT RAPIDES**
SCHNELL ERWÄRMBARE UND KÜHLBARE FORM
QUICK HEATING AND COOLING MOULD

(30) Priorité: 19.06.2012 FR 1255756
(43) Date de publication de la demande: 22.04.2015
(73) Titulaire: Roctool, 73370 Le Bourget du Lac (FR)
(72) Inventeur: GUICAHRD, Alexandre, 73310 La Chapelle du Mont du Chat (FR); FEIGENBLUM, José, 73170 Saint Paul (FR)
(74) Mandataire: Ipside
(86) Numéro de dépôt international: PCT/EP2013/062817
(87) Numéro de publication internationale: WO 2013/190020

(56) Documents cités:
- EP-A1- 2 199 057
- WO-A1-2006/112571
- WO-A1-2008/039485
- JP-A- S6 378 720
- JP-A- H05 337 997

## Description

L'invention concerne un moule à chauffage et refroidissement rapides Plus particulièrement, l'invention concerne un dispositif de chauffage par induction et de refroidissement rapide d'un moule, destiné au moulage par injection de matière plastique ou de métal, à l'état liquide ou pâteux.

Le document EP 1 894 442, au nom de la demanderesse, décrit un moule équipé d'un dispositif de chauffage par induction et d'un dispositif de refroidissement par circulation d'un fluide caloporteur. Ce dispositif de l'art antérieur comprend un moule constitué d'une partie fixe et d'une partie mobile. Chacune des parties est susceptible de recevoir un circuit de chauffage par induction et un circuit de refroidissement. Chacune de ces parties consiste en une carcasse sur laquelle est rapportée une pièce constituant la surface moulante est qui confère sa forme finale à la pièce réalisée dans ce moule. Pour chaque partie du moule, la surface moulante est la surface à chauffer et à refroidir, laquelle surface est en contact avec la matière constituant la pièce. Les inducteurs sont placés dans des cavités qui s'étendent sous ladite surface moulante. Ces cavités sont le plus souvent réalisées par rainurage de la face inférieure de ladite zone moulante à l'interface entre celle-ci et la carcasse du moule. Le circuit de refroidissement est lui réalisé au moyen de conduits percés dans la carcasse, plus éloignés de la surface moulante. Ce circuit de refroidissement assure à la fois le refroidissement de cette carcasse, laquelle est, selon un mode de réalisation courant, réalisée dans un matériau peu sensible au chauffage par induction, et le refroidissement de la surface moulante. Finalement la carcasse de chaque partie est en liaison mécanique avec un support.

Le document EP 2 199 057 décrit aussi un moule équipé d'un dispositif de chauffage par induction selon l'art antérieur.

Cette configuration donne de bons résultats mais s'avère difficile de mise en oeuvre lorsque le moule est de grande dimension ou lorsque la surface moulante présente une forme complexe. Dans ces conditions, les gradients de température qui apparaissent tant au chauffage qu'au refroidissement entraînent une distorsion de la forme du moule dans son ensemble d'une part, et à une échelle plus fine, une distorsion différentielle entre la zone moulante et la carcasse, laquelle distorsion différentielle conduit à un mauvais contact entre ces deux éléments et dégrade la qualité du refroidissement en créant, du fait de cette distorsion différentielle, des barrières thermiques entre lesdits deux éléments.

L'invention vise à résoudre les inconvénients de l'art antérieur et concerne à cette fin un moule, selon la revendication 1.

L'invention est avantageusement mise en oeuvre selon les modes de réalisation exposés ci-après, lesquels sont à considérer individuellement ou selon toute combinaison techniquement opérante.

Selon mode de réalisation, les inducteurs sont enserrés dans des gaines étanches aptes à résister à une température d'au moins 250 °C et le dispositif de refroidissement consiste en un liquide caloporteur s'écoulant dans les cavités autour des inducteurs.

Selon un troisième mode de réalisation, le dispositif de refroidissement consiste en la circulation d'un fluide diélectrique dans les cavités autour des inducteurs.

Avantageusement, le fluide diélectrique est une huile électriquement isolante.

Selon un quatrième mode de réalisation, le dispositif de refroidissement comprend une cavité remplie d'un fluide apte à changer de phase sous l'effet de la température et dont la chaleur latente de transformation est suffisante pour absorber la chaleur de la zone moulante à une température déterminée.

Selon un cinquième mode de réalisation, le dispositif de refroidissement comprend une injection d'un gaz dans les cavités autour des inducteurs.

Avantageusement, l'injection du gaz est réalisée selon une direction transverse par rapport à la direction longitudinale. Ainsi, il se crée une turbulence dans l'écoulement de l'air, laquelle turbulence favorise les échanges thermiques. Cette turbulence est fonction de la pression d'injection du gaz et de l'angle entre le conduit d'injection et la direction longitudinale des cavités.

Avantageusement, le dispositif de refroidissement du moule objet de l'invention comprend, selon ce dernier mode de réalisation, plusieurs points d'injection de gaz sur la longueur de la cavité selon la direction longitudinale.

Avantageusement, le gaz est de l'air, injecté à une pression supérieure à 80 bars L'utilisation d'air comme fluide de refroidissement simplifie la mise en oeuvre du dispositif notamment vis-à-vis des problèmes d'étanchéïté.

Selon un mode de réalisation particulier, le moule objet de l'invention comprend un deuxième circuit d'induction distant de premier par rapport à l'interface et alimenté en courant par un générateur séparé.

Selon un mode de réalisation avantageux la carcasse et la zone moulante sont réalisées dans un alliage de fer (Fe) et de nickel (Ni) de type INVAR, dont le point de Curie est proche de la température de transformation de la matière moulée. Ainsi, lorsque le matériau constituant la carcasse et la zone moulante est ferromagnétique, donc sensible au chauffage par induction, son coefficient de dilatation est faible. Lorsque, le matériau chauffant, sa température se rapproche du point de Curie, il devient peu sensible au chauffage par induction. Ainsi, cette constitution permet de contrôler la dilatation différentielle de la carcasse et de la zone moulante mais aussi de la carcasse et par rapport au support mécanique de ladite carcasse sur la presse.

L'invention est exposée ci-après selon ses modes de réalisation préférés, nullement limitatifs, et en référence aux figures 1 à 6, dans lesquelles :
- la figure 1 représente selon une vue en coupe transversale un exemple de réalisation général du moule objet de l'invention ;
- la figure 2 montre selon une vue en coupe transversale une partie du moule objet de l'invention selon un mode de réalisation comportant un feuillard entre la zone moulante et la carcasse ;
- la figure 3 est une vue en coupe transversale de la première partie d'un moule selon un mode de réalisation de l'invention où le dispositif de refroidissement comprend une cavité remplie d'un matériau apte à changer de phase à une température donnée en absorbant une chaleur latente de transformation ;
- la figure 4 représente, selon une vue en coupe transversale, une partie du moule objet de l'invention selon un mode de réalisation où le refroidissement est obtenu par la circulation d'un fluide caloporteur dans les cavités recevant les inducteurs ;
- la figure 5 montre selon une vue en coupe transversale un exemple de réalisation d'une partie du moule objet de l'invention comportant un dispositif de refroidissement par injection transversale de gaz sous pression dans les cavités recevant les inducteurs, avec, en section SS, l'orientation des injecteur selon une coupe longitudinale ;
- et la figure 6 est une vue en coupe transversale d'un exemple de réalisation d'une partie du moule objet de l'invention, comportant deux circuits d'induction distants et séparés.

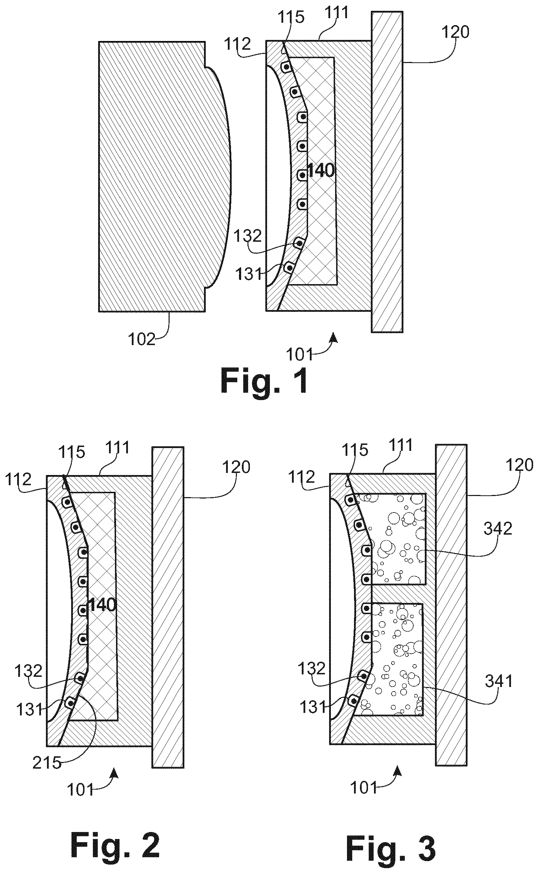

Figure 1, selon un premier exemple de réalisation, le moule objet de l'invention comporte une première (101) partie et une deuxième (102) partie. La description suivante est réalisée en prenant pour référence la première partie (101). L'homme du métier adaptera l'ensemble des aménagements et des modes de réalisation décrits sur cette première partie (101) à la deuxième partie dudit moule. Selon cet exemple de réalisation, la première partie (101) est fixée sur un support mécanique (120). Ladite première partie du moule comporte une carcasse (111) fixée sur ce support mécanique (120) et reçoit à son extrémité distale dudit support (120) une zone moulante (112) rapportée sur ladite carcasse (111) parfixation mécanique (non représentée). Ainsi, une interface mécanique (115) est créée entre la carcasse et la zone moulante. Le moule comporte un dispositif de chauffage comprenant des inducteurs (132) s'étendant dans des cavités (131) à l'interface (115) entre la zone moulante (112) et la carcasse (111), lesdites cavités sont, selon cet exemple de réalisation, obtenues par rainurage de la face intérieure de la zone moulante. Un dispositif de refroidissement (140), représenté ici schématiquement, s'étend également à l'interface (115).

Figure 2, selon un exemple de réalisation, le moule objet de l'invention comprend un feuillard (215) entre l'interface (115) et le dispositif de refroidissement. Ce feuillard en graphite, en nickel (Ni) ou en cuivre (Cu), thermiquement conducteur, est apte à compenser les différences de forme entre la zone moulante (112) et la carcasse (111) à l'interface (115), de sorte à assurer un contact uniforme entre la carcasse et la zone moulante, et ainsi permettre une bonne conduction thermique entre les deux. La nature du feuillard est choisie en fonction de la température à atteindre lors du moulage. Avantageusement, le feuillard est brasé à l'interface entre la zone moulante et la carcasse, moule fermé, en utilisant le dispositif de chauffage du moule pour réaliser la brasure. Ainsi, l'adaptation de forme est parfaite.

Figure 3, selon un autre exemple de réalisation le dispositif de refroidissement comprend une cavité (341, 342) laquelle cavité est remplie par un matériau apte à changer de phase pour une température déterminée, ce changement de phase s'accompagnant de l'absorption d'une chaleur latente élevée. Le changement de phase est une fusion ou une vaporisation. Ledit matériau est, par exemple, de l'eau.

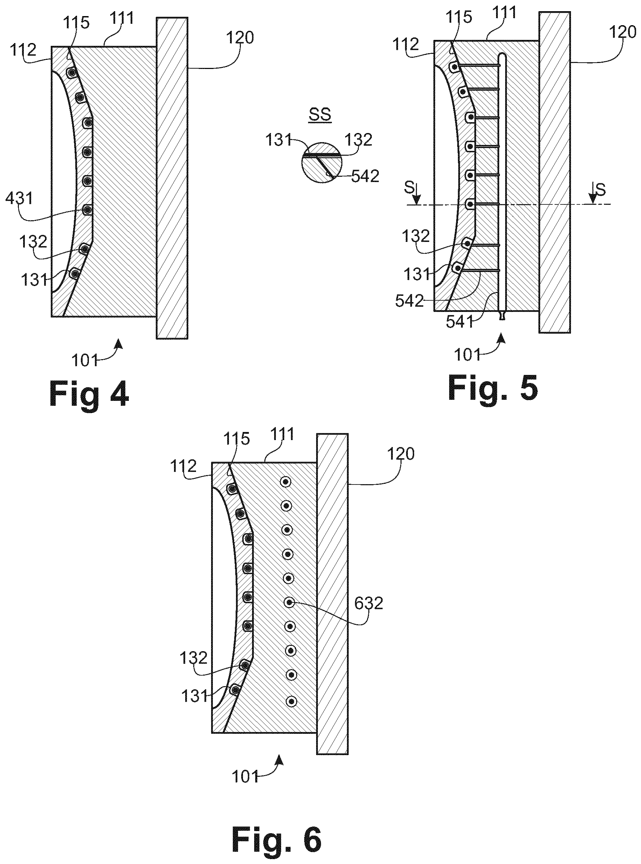

Figure 4, selon un autre exemple de réalisation du moule objet de l'invention, chaque inducteur (132) est placé dans une gaine (431) étanche résistante à haute température. Selon la température visée pour les inducteurs, une telle gaine (431) est constituée de verre ou de silice, comportant préférentiellement des porosités fermées pour être à la fois étanche et apte à résister au choc thermique du refroidissement. Lorsque la température des inducteurs atteinte en fonctionnement est limitée, par exemple pour le moulage de certaines matières plastiques, ladite gaine est constituée d'un polymère thermo-rétractable, par exemple du polytétrafluoroéthylène (PTFE ou Teflon ®) pour des température de fonctionnement des inducteurs allant jusqu'à 260 °C. Ainsi, le dispositif de refroidissement est constitué par une circulation d'un fluide caloporteur, par exemple de l'eau, dans les cavités (131) recevant les inducteurs, lesdits inducteurs étant isolés du contact du fluide caloporteur par la leur gaine étanche.

Alternativement, le fluide caloporteur est un liquide diélectrique par exemple une huile diélectrique. Ce type de produit est disponible dans le commerce notamment pour le refroidissement de transformateurs. Dans ce cas, l'isolation électrique des inducteurs (132) n'est pas nécessaire.

Figure 5, selon un autre exemple de réalisation, le refroidissement est réalisé par l'injection d'un gaz dans les cavités (131) recevant les inducteurs (132). Pour améliorer l'efficacité de ce refroidissement, le gaz est injecté sous une pression de l'ordre de 80 bars (80. 10⁵ Pa), par une pluralités de conduits (541) répartis longitudinalement le long des inducteurs (132). L'injection est ainsi réalisée en plusieurs points, le long des inducteurs, par des conduits d'injection (542), transversalement auxdits inducteurs (132).

Section SS, selon une vue en coupe longitudinale, le conduit d'injection (542) est orienté de sorte que la direction du jet fluide dans la cavité de l'inducteur ait une composante parallèle à la direction longitudinale. Ainsi, par un choix approprié de l'angle d'injection, un refroidissement efficace est obtenu par une circulation en turbulence du gaz le long de l'inducteur (132).

Les gradients de température présents notamment dans la carcasse, laquelle est fixée au support mécanique, sont susceptibles d'entraîner des distorsions du dispositif ou des contraintes de déformation différentielle. Aussi, selon un mode de réalisation avantageux, la carcasse (111) et la zone moulante (112) sont réalisées dans un alliage de fer et de nickel comprenant 64 % de fer et 36 % de nickel, dit INVAR, et présentant un faible coefficient de dilatation thermique pour des températures inférieures à la température de Curie de ce matériau, lorsque celui-ci se trouve à l'état ferromagnétique, donc sensible au chauffage par induction.

Figure 6, selon un dernier mode de réalisation compatible avec les modes de réalisation précédents, le moule comprend une deuxième série (632) d'inducteurs distante de la première. La première (132) et la deuxième (632) série d'inducteurs sont connectées à deux générateurs différents. Ainsi la chauffe est répartie de manière dynamique entre les deux séries d'inducteurs, de sorte à limiter les déformations des parties du moule, déformations engendrées par la dilatation thermique combinée aux gradients thermiques apparaissant en phase de chauffage et de refroidissement.

## Revendications

1. Moule comprenant une première partie laquelle comporte une carcasse (111) sur laquelle est rapportée une zone moulante (112) formant une interface (115) mécanique entre ladite zone moulante et la carcasse, et des moyens de chauffage sous la forme d'inducteurs (132), s'étendant selon une direction, dite longitudinale, dans des cavités (131) entre ladite interface (115) et la zone moulante (112), et un dispositif de refroidissement (140) s'étendant à l'interface entre ladite zone moulante et la carcasse **caractérisé en ce qu'**il comporte à l'interface entre la carcasse et la zone moulante un feuillard (215) constitué de graphite ou de cuivre ou de nickel ou d'un alliage de nickel, brasé sur la zone moulante (112), le moule étant fermé, en utilisant les moyens de chauffage du moule.

2. Moule selon la revendication 1, dans lequel les inducteurs (132) sont enserrés dans des gaines (431) étanches, aptes à résister à une température d'au moins 250 °C, et que le dispositif de refroidissement consiste en un liquide caloporteur s'écoulant dans les cavités (131) autour des inducteurs (132).

3. Moule selon la revendication 1, dans lequel le dispositif (140) de refroidissement consiste en la circulation d'un fluide diélectrique dans les cavités (131) autour des inducteurs (132).

4. Moule selon la revendication 3, dans lequel le fluide diélectrique est une huile électriquement isolante.

5. Moule selon la revendication 1, dans lequel le dispositif de refroidissement comprend une cavité (341, 342), remplie d'un fluide apte à changer de phase sous l'effet de la température et dont la chaleur latente de transformation est suffisante pour absorber la chaleur de la zone moulante (112) à une température déterminée.

6. Moule selon la revendication 1, dans lequel le dispositif de refroidissement comprend un dispositif (541, 542) d'injection d'un gaz dans les cavités (131) autour des inducteurs (132).

7. Moule selon la revendication 6, dans lequel l'injection du gaz est réalisée par des injecteurs (542) s'étendant selon une direction transverse par rapport à la direction longitudinale.

8. Moule selon la revendication 7, comportant plusieurs injecteurs (542) pour l'injection de gaz sur la longueur de la cavité (131) selon la direction longitudinale.

9. Moules selon la revendication 6, dans lequel le gaz est de l'air injecté à une pression égale ou supérieure à 80 bars (80.10⁵ Pa).

10. Moule selon la revendication 1, comportant un deuxième (632) circuit d'induction distant de premier (132) par rapport à l'interface (115) et alimenté en courant par un générateur séparé.

11. Moule selon la revendication 1, dans lequel la carcasse (111) et la zone moulante (112) sont constituées d'un alliage de fer et de nickel de type INVAR.

## Patentansprüche

1. Form, umfassend einen ersten Teil, der einen Unterbau (111) umfasst, an dem ein Formgebungsbereich (112) angebracht ist, der eine mechanische Schnittstelle (115) zwischen dem Formgebungsbereich und dem Unterbau bildet, und Heizmittel in der Form von Induktoren (132), die sich in Hohlräumen (131) zwischen der Schnittstelle (115) und dem Formgebungsbereich (112) in einer sogenannten Längsrichtung erstrecken, und eine Kühlvorrichtung (140), die sich an der Schnittstelle zwischen dem Formgebungsbereich und dem Unterbau erstreckt, **dadurch gekennzeichnet, dass** sie an der Schnittstelle zwischen dem Unterbau und dem Formgebungsbereich ein aus Graphit oder Kupfer oder Nickel oder einer Nickellegierung bestehendes Band (215) umfasst, das unter Verwendung der Heizmittel der Form auf den Formgebungsbereich (112) gelötet wird, wobei die Form geschlossen ist.

2. Form nach Anspruch 1, wobei die Induktoren (132) in dichten Ummantelungen (431) eingeschlossen sind, die einer Temperatur von mindestens 250 °C widerstehen können, und die Kühlvorrichtung in einer Wärmeträgerflüssigkeit besteht, die in den Hohlräumen (131) um die Induktoren (132) herum fließt.

3. Form nach Anspruch 1, wobei die Kühlvorrichtung (140) in der Umwälzung eines dielektrischen Fluids in den Hohlräumen (131) um die Induktoren (132) herum besteht.

4. Form nach Anspruch 3, wobei das dielektrische Fluid ein elektrisch isolierendes Öl ist.

5. Form nach Anspruch 1, wobei die Kühlvorrichtung einen Hohlraum (341, 342) umfasst, der mit einem Fluid gefüllt ist, welches unter der Einwirkung der Temperatur die Phase wechseln kann und dessen latente Transformationswärme ausreichend ist, um bei einer bestimmten Temperatur die Wärme des Formgebungsbereichs (112) zu absorbieren.

6. Form nach Anspruch 1, wobei die Kühlvorrichtung eine Vorrichtung (541, 542) zum Einspritzen eines Gases in die Hohlräume (131) um die Induktoren (132) herum umfasst.

7. Form nach Anspruch 6, wobei die Einspritzung des Gases durch Einspritzdüsen (542) ausgeführt wird, die sich in Bezug auf die Längsrichtung in eine Querrichtung erstrecken.

8. Form nach Anspruch 7, die auf der Länge des Hohlraums (131) in der Längsrichtung mehrere Einspritzdüsen (542) für das Einspritzen von Gas umfasst.

9. Formen nach Anspruch 6, wobei das Gas Luft ist, die mit einem Druck von gleich oder größer als 80 Bar (80.10⁵ Pa) eingespritzt wird.

10. Form nach Anspruch 1, die einen zweiten (632) Induktionskreis umfasst, der in Bezug auf die Schnittstelle (115) vom ersten (132) beabstandet ist und über einen getrennten Generator mit Strom versorgt wird.

11. Form nach Anspruch 1, wobei der Unterbau (111) und der Formgebungsbereich (112) aus einer Legierung aus Eisen und Nickel vom Typ INVAR bestehen.

## Claims

1. Mold comprising a first portion which comprises a shell (111) on which is returned a molding zone (112) forming a mechanical interface (115) between said molding zone and the shell, and heating means in the form of inducers (132), extending along a direction, called longitudinal, in cavities (131) between said interface (115) and the molding zone (112), and a cooling device (140) extending to the interface between said molding zone and the shell **characterized in that** it comprises at the interface between the shell and the molding zone, a strip (215) made of graphite or copper or nickel or a nickel alloy, soldered on the molding zone (112), the mold being closed, by using the means for heating the mold.

2. Mold according to claim 1, wherein the inducers (132) are clamped in sealed sleeves (431), capable of resisting a temperature of at least 250°C, and that the cooling device consists of a heat-transfer liquid flowing into the cavities (131) around the inducers (132).

3. Mold according to claim 1, wherein the cooling device (140) consists of the circulation of a dielectric fluid in the cavities (131) around the inducers (132).

4. Mold according to claim 3, wherein the dielectric fluid is an electrically-insulating oil.

5. Mold according to claim 1, wherein the cooling device comprises a cavity (341, 342), filled with a fluid capable of changing phase under the effect of the temperature and of which the latent transformation heat is sufficient to absorb the heat from the molding zone (112) at a determined temperature.

6. Mold according to claim 1, wherein the cooling device comprises a device (541, 542) for injecting a gas into the cavities (131) around the inducers (132).

7. Mold according to claim 6, wherein the injection of the gas is carried out by injectors (542) extending along a transverse direction with respect to the longitudinal direction.

8. Mold according to claim 7, comprising several injectors (542) to inject gas over the length of the cavity (131) along the longitudinal direction.

9. Mold according to claim 6, wherein the gas is air injected at a pressure equal to or greater than 80 bars (80.10⁵ Pa).

10. Mold according to claim 1, comprising a second induction circuit (632) separate from the first (132) with respect to the interface (115) and supplied with power by a separate generator.

11. Mold according to claim 1, wherein the shell (111) and the molding zone (112) are made of an iron and nickel alloy of the INVAR type.
